# FASCICULE DE BREVET EUROPEEN

(11) **EP 1 122 281 B1**
(45) Date de publication et mention de la délivrance du brevet: **07.06.2006**
(21) Numéro de dépôt: 01101179.8
(22) Date de dépôt: 24.01.2001
(51) Int. Cl.: C08L 19/00, B60C 1/00

(54) **Pneumatiques pour lourdes charges, et utilisation d'une composition de caoutchouc pour retarder l'usure irrégulière sur ces pneumatiques.**
Reifen für schwere Lasten und Verwendung einer Kautschukzusammensetzung zur Verzögerung des unregelmässigen Verschleisses dieser Reifen
Tyres for heavy loads and use of a rubber composition for retarding the irregular wear of those tyres

(30) Priorité: 07.02.2000 FR 0001513
(43) Date de publication de la demande: 08.08.2001
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: Hodge, Thomas, Simpsonville, South Carolina 29681 (US)
(74) Mandataire: Hiebel, Robert

(56) Documents cités:
- FR-A- 2 765 882
- US-A- 6 013 718

## Description

La présente invention concerne des pneumatiques adaptés pour porter de lourdes charges, et une utilisation d'une composition de caoutchouc pour retarder lors du roulage l'apparition de l'usure irrégulière sur les bandes de roulement de tels pneumatiques. L'invention s'applique à des pneumatiques pour véhicules poids-lourds.

D'une manière connue, on évalue la résistance à l'usure d'une enveloppe de pneumatique destinée à porter de lourdes charges par la mesure de la perte de poids de cette enveloppe, par rapport à une enveloppe témoin et suite à un roulage sur une même distance qui soit suffisante pour entraîner une perte de poids significative.

Indépendamment de la résistance à l'usure, on entend usuellement par moment d'apparition de l'usure irrégulière sur une bande de roulement le moment où la pente de la caractéristique « perte de poids de gomme en fonction de la distance de roulage » augmente d'une manière sensible (cette pente est parfois appelée « vitesse de perte de poids »). Ce changement soudain de pente coïncide avec la formation d'un facies particulier pour la face radialement externe de la bande de roulement.

Ce facies d'usure irrégulière peut être caractérisé, d'une part, par une vitesse de perte de poids très élevée à l'emplacement des bords des nervures centrales qui sont situées à proximité du plan circonférentiel médian de la bande de roulement et, d'autre part, par une vitesse de perte de poids à l'emplacement des nervures de la zone « épaule » de ladite bande qui est beaucoup plus élevée que celle qui est relative auxdites nervures centrales.

Pour retarder l'apparition de l'usure irrégulière dans une bande de roulement de pneumatique portant de lourdes charges, diverses voies ont été choisies.

Une première voie a consisté à agir sur les formes des sculptures de bande de roulement, comme par exemple décrit dans les documents de brevets JP-A-99/105 513, JP-A-97/175 120, ou EP-A-705 721.

Une seconde voie a consisté à réaliser une bande de roulement en deux parties, comme décrit dans le document de brevet US-A-4 360 049.

Une partie radialement externe (i.e. destinée à être en contact avec le sol) est constituée d'une composition de caoutchouc dont la matrice élastomère comprend à titre majoritaire un copolymère de styrène et de butadiène, et qui comprend une charge renforçante constituée de noir de carbone. Cette partie radialement externe procure à la bande de roulement correspondante une usure irrégulière qui est retardée d'une manière satisfaisante et, en outre, une résistance satisfaisante aux agressions dues au roulage. Cependant, une caractéristique intrinsèque de la composition qui constitue cette partie externe est qu'elle présente des pertes hystérétiques élevées.

C'est la raison pour laquelle est prévue une partie radialement interne pour ladite bande de roulement, qui est en contact avec la nappe sommet de protection extérieure. Cette partie radialement interne est constituée d'une composition intrinsèquement caractérisée par des pertes hystérétiques relativement réduites, ce qui a pour effet de limiter l'échauffement interne de la bande de roulement en roulage et, par conséquent, la résistance au roulement du pneumatique correspondant.

Une troisième voie à consisté à utiliser une bande de roulement qui est caractérisée par la formulation particulière de l'unique composition de caoutchouc qui la constitue.

En premier lieu, on a utilisé à titre de compositions uniques de bande de roulement des compositions comprenant une matrice élastomère à base de caoutchouc naturel, en raison des pertes hystérétiques réduites que ce dernier présente, et une charge renforçante constituée de noir de carbone. Un inconvénient de ces compositions réside dans l'adhérence relativement réduite qu'elles confèrent aux bandes de roulement correspondantes.

On a donc cherché à remplacer ces compositions en associant au noir de carbone une matrice élastomère à base d'un copolymère d'un monomère diène conjugué et d'un monomère vinylaromatique, tel qu'un copolymère de styrène et de butadiène. Les compositions en résultant confèrent aux bandes de roulement correspondantes des résultats satisfaisants pour ce qui est de la résistance à l'usure et de retarder l'usure irrégulière, et elles leur confèrent également une bonne résistance aux agressions dues au roulage. Cependant, ces compositions présentent des pertes hystérétiques très élevées.

C'est la raison pour laquelle on a cherché à adjoindre à ce type de copolymère une fonction active en extrémité de chaîne pour le couplage au noir de carbone. Les compositions ainsi obtenues présentent des pertes hystérétiques sensiblement équivalentes à celles générées par le caoutchouc naturel. Cependant, ces compositions confèrent à la bande de roulement une résistance insuffisante aux agressions et elles ne permettent ni de retarder d'une manière satisfaisante l'usure irrégulière, ni de procurer une résistance à l'usure satisfaisante.

En vue de remédier à l'ensemble des inconvénients précités, notamment relatifs aux pertes hystérétiques, à la résistance à l'usure et à l'usure irrégulière, on a récemment cherché à remplacer ces compositions traditionnelles de bande de roulement en utilisant de la silice à titre de charge renforçante majoritaire, à la place du noir de carbone.

L'association à de la silice majoritaire du caoutchouc naturel ou d'un copolymère préparé en solution d'un diène conjugué et d'un vinylaromatique procure des pertes hystérétiques qui sont relativement réduites pour les compositions correspondantes. Cependant, cette association ne permet pas de retarder d'une manière satisfaisante l'usure irrégulière pour les bandes de roulement constituées de ces compositions, et la résistance à l'usure de ces dernières est en outre très insatisfaisante.

D'une manière plus générale, on notera que l'utilisation d'une telle charge renforçante conduit à des compositions difficiles à mettre en oeuvre avec des polymères de synthèse. De plus, le coût de préparation de ces compositions est relativement élevé, du fait de l'utilisation obligatoire d'un agent de liaison silice/ élastomère.

On notera également que l'utilisation de coupage noir de carbone/ silice à titre de charge renforçante implique les mêmes inconvénients précités, en relation avec une charge à base de noir de carbone ou de silice selon les fractions massiques relatives qui sont utilisées.

La demanderesse a découvert de façon inattendue qu'une composition de caoutchouc réticulable constituant l'intégralité d'une bande de roulement de pneumatique poids-lourd, ladite composition étant telle qu'énoncée à la revendication 1, peut être avantageusement utilisée pour retarder lors du roulage l'apparition de l'usure irrégulière pour ladite bande de roulement, sans pénaliser pour cette dernière la résistance à l'usure et la résistance au roulement, par rapport à des compositions de bandes de roulement de type poids-lourd traditionnelles qui sont soit majoritairement à base de caoutchouc naturel et de noir de carbone, soit majoritairement à base de copolymères d'un diène conjugué et d'un vinylaromatique et de silice.
◇ Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).
   De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15 % (% en moles).
   Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur.à 50 %.
   Le ou chaque groupe fonctionnel actif pour un couplage à une charge blanche renforçante, que comporte l'élastomère SBR peut être :
   - un groupe silanol ou un bloc polysiloxane ayant une extrémité silanol, comme cela est décrit dans le document de brevet français FR-A-2 740 778 au nom de la demanderesse ;
      Plus précisément, ce document enseigne l'utilisation d'un agent de fonctionnalisation d'un polymère vivant obtenu par voie anionique, en vue d'obtenir une fonction active pour un couplage à de la silice. Cet agent de fonctionnalisation est constitué d'un polysiloxane cyclique, tel qu'un polyméthylcyclo -tri, -tétra ou -déca siloxane, ledit agent étant, à titre préférentiel, l'hexaméthylcyclotrisiloxane. Les polymères fonctionnalisés ainsi obtenus peuvent être séparés du milieu réactionnel conduisant à leur formation par extraction à la vapeur d'eau du solvant, sans que leur macrostructure et, par conséquent, leurs propriétés physiques n'évoluent ; ou
   - un groupe alkoxysilane.
      On peut citer à ce titre la réaction de fonctionnalisation décrite dans le document de brevet international WO-A-88/05448 en vue d'un couplage à de la silice, qui consiste à faire réagir sur un polymère vivant obtenu par voie anionique un composé alkoxysilane ayant au moins un reste alkoxyle non hydrolysable. Ce composé est choisi parmi les halogénoalkylalkoxysilane.
      On peut également citer le document de brevet français FR-A-2 765 882, au titre de l'obtention de fonctions alkoxysilane. Ce document divulgue l'utilisation d'un trialkoxysilane, tel que le 3-glycidyloxypropyltrialkoxysilane, pour la fonctionnalisation d'un polymère diénique vivant, en vue du couplage à du noir de carbone ayant de la silice fixée à sa surface à titre de charge renforçante majoritaire.
      On notera que le taux de fonctions actives obtenues dans l'élastomère fonctionnalisé selon l'invention est de préférence supérieur à 70 %.

   Bien entendu, les compositions des pneumatiques de l'invention peuvent contenir un seul élastomère SBR comportant un ou plusieurs groupes fonctionnels actifs pour un couplage à une charge blanche renforçante, ou un coupage de cet élastomère avec tout autre élastomère conventionnellement utilisé dans les pneumatiques, tel que du caoutchouc naturel ou un coupage à base de caoutchouc naturel et d'un élastomère synthétique éventuellement couplé et/ou étoilé ou encore partiellement ou entièrement fonctionnalisé de sorte à présenter une groupe fonctionnel ne présentant pas l'activité précitée.
   Il est évident que plus la fraction d'élastomère ne comportant pas ledit groupe fonctionnel actif pour un couplage à une charge blanche renforçante sera élevée dans la composition conforme à l'invention, moindre sera l'amélioration des propriétés de ladite composition.
   Cette fraction d'élastomère dépourvu dudit groupe fonctionnel actif selon l'invention pourra varier entre 1 et 70 parties en poids pour 100 parties d'élastomère comportant ledit groupe selon l'invention.
   Les compositions des pneumatiques conformes à l'invention peuvent être préparées selon les procédés connus de travail thermo-mécanique des constituants en une ou plusieurs étapes. On peut par exemple les obtenir par un travail thermo-mécanique en une étape dans un mélangeur interne qui dure de 3 à 7 minutes, avec une vitesse de rotation des palettes de 50 tours par minute, ou en deux étapes dans un mélangeur interne qui durent respectivement de 3 à 5 minutes et de 2 à 4 minutes, suivies d'une étape de finition effectuée à environ 80° C, pendant laquelle sont incorporés le soufre et les accélérateurs de vulcanisation dans le cas d'une composition à réticuler au soufre.
◇ La charge blanche renforçante qui est utilisée à titre de charge renforçante peut constituer la totalité ou une partie majoritaire de la charge renforçante totale, dans ce dernier cas associée par exemple à du noir de carbone.
   De préférence, dans les compositions de caoutchouc des pneumatiques conformes à l'invention, la charge blanche renforçante constitue la majorité, i.e. plus de 50 % en poids de la charge renforçante totale, plus préférentiellement plus de 80 % en poids de cette charge renforçante totale. En effet, l'expérience montre que les propriétés précitées de la composition sont d'autant plus améliorées, que la charge renforçante qu'elle comprend contient une fraction massique plus élévée en charge blanche renforçante, et que lesdites propriétés sont optimales lorsque ladite composition contient uniquement une charge blanche renforçante, par exemple de la silice, à titre de charge renforçante. Ce dernier cas constitue donc un exemple préférentiel de composition de caoutchouc des pneumatiques selon l'invention.
   De plus, ladite charge blanche renforçante est présente dans ladite composition selon une quantité allant de 20 à 80 pce (parties en poids pour cent parties de ladite matrice élastomère).
   Dans la présente demande, on entend par "charge blanche renforçante" une charge "blanche" (i.e., inorganique, en particulier minérale), parfois aussi appelée charge "claire", capable de renforcer à elle seule, sans autre moyen qu'un système de couplage intermédiaire, une composition de caoutchouc destinée à la fabrication de pneumatiques, en d'autres termes capable de remplacer dans sa fonction de renforcement une charge conventionnelle de noir de carbone de grade pneumatique.
   Préférentiellement, la charge blanche renforçante est, en totalité ou tout du moins majoritairement, de la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, même si les silices précipitées hautement dispersibles sont préférées.
   A titre encore plus préférentiel, ladite silice présentant des surfaces spécifiques BET ou CTAB qui vont toutes deux de 80 m²/g à 260 m²/g.
   Dans le présent exposé, la surface spécifique BET est déterminée de manière connue, selon la méthode de Brunauer-Emmet-Teller décrite dans "The Journal of the American Chemical Society" Vol. 60, page 309, février 1938 et correspondant à la norme AFNOR-NFT-45007 (novembre 1987) ; la surface spécifique CTAB est la surface externe déterminée selon la même norme AFNOR-NFT-45007 de novembre 1987.
   Par silice hautement dispersible, on entend toute silice ayant une aptitude très importante à la désagglomération et à la dispersion dans une matrice élastomérique, observable de manière connue par microscopie électronique ou optique, sur coupes fines. Comme exemples non limitatifs de telles silices hautement dispersibles préférentielles, on peut citer la silice Perkasil KS 430 de la société Akzo, la silice BV 3380 de la société Degussa, les silices Zeosil 1165 MP et 1115 MP de la société Rhodia, la silice Hi-Sil 2000 de la société PPG, les silices Zeopol 8741 ou 8745 de la Société Huber, des silices précipitées traitées telles que par exemple les silices "dopées" à l'aluminium décrites dans la demande EP-A-0 735 088.
   L'état physique sous lequel se présente la charge blanche renforçante est indifférent, que ce soit sous forme de poudre, de microperles, de granulés, ou encore de billes. Bien entendu on entend également par charge blanche renforçante des mélanges de différentes charges blanches renforçantes, en particulier de silices hautement dispersibles telles que décrites ci-dessus.
   La charge blanche renforçante peut être également utilisée en coupage (mélange) avec du noir de carbone. Comme noirs de carbone conviennent tous les noirs de carbone, notamment les noirs du type HAF, ISAF, SAF, conventionnellement utilisés dans les pneumatiques et particulièrement dans les bandes de roulement des pneumatiques. A titre d'exemples de tels noirs, on peut citer les noirs N115, N134, N234, N339, N347, N375. La quantité de noir de carbone présente dans la charge renforçante totale peut varier dans de larges limites, cette quantité étant préférentiellement inférieure à la quantité de charge blanche renforçante présente dans la composition de caoutchouc.
   Par exemple, les coupages noir/ silice ou les noirs partiellement ou intégralement recouverts de silice conviennent pour constituer la charge renforçante. Conviennent également les noirs de carbone modifiés par de la silice tels que, à titre non limitatif, les charges qui sont commercialisées par la société CABOT sous la dénomination « CRX 2000 », et qui sont décrites dans le document de brevet international WO-A-96/37547. A titre de charge blanche renforçante, on peut également utiliser
   - des alumines (de formule Al₂O₃), telles que les alumines à dispersibilité élevée qui sont décrites dans le document de brevet européen EP-A-810 258, ou encore
   - des hydroxydes d'aluminium, tels que ceux décrits dans le document de brevet international WO-A-99/28376.
◇ La composition de caoutchouc des pneumatiques selon l'invention comprend en outre de manière classique un agent de liaison charge blanche renforçante / matrice élastomère (encore appelé agent de couplage), qui a pour fonction d'assurer une liaison (ou couplage) suffisante, de nature chimique et/ou physique, entre ladite charge blanche et la matrice, tout en facilitant la dispersion de cette charge blanche au sein de ladite matrice.
   Un tel agent de liaison, au moins bifonctionnel, a par exemple comme formule générale simplifiée « Y-T-X », dans laquelle:
   - Y représente un groupe fonctionnel (fonction « Y ») qui est capable de se lier physiquement et/ou chimiquement à la charge blanche, une telle liaison pouvant être établie, par exemple, entre un atome de silicium de l'agent de couplage et les groupes hydroxyle (OH) de surface de la charge (par exemple les silanols de surface lorsqu'il s'agit de silice);
   - X représente un groupe fonctionnel (« fonction X ») qui est capable de se lier physiquement et/ou chimiquement à l'élastomère, par exemple par l'intermédiaire d'un atome de soufre;
   - T représente un groupe hydrocarboné permettant de relier Y et X.

   Ces agents de liaison ne doivent en particulier pas être confondus avec de simples agents de recouvrement de la charge considérée lesquels, de manière connue, peuvent comporter la fonction Y active vis-à-vis de la charge, mais sont dépourvus de la fonction X active vis-à-vis de l'élastomère.
   De tels agents de liaison, d'efficacité variable, ont été décrits dans un très grand nombre de documents et sont bien connus de l'homme du métier. On peut utiliser en fait tout agent de liaison connu pour ou susceptible d'assurer efficacement, dans les compositions de caoutchouc diénique utilisables pour la fabrication de pneumatiques, la liaison entre silice et élastomère diénique, tels que par exemple des organosilanes, notamment des alkoxysilanes polysulfurés ou des mercaptosilanes, ou des polyorganosiloxanes porteurs des fonctions X et Y précitées.
   L'agent de couplage préférentiellement utilisé est un alkoxysilane polysulfuré, porteur de manière connue de deux fonctions notées ici "Y" et "X", greffable d'une part sur la charge blanche au moyen de la fonction "Y" (fonction alkoxysilyle) et d'autre part sur l'élastomère au moyen de la fonction "X" (fonction soufrée).
   On utilise en particulier des alkoxysilanes polysulfurés, tels que décrits par exemple dans les documents de brevet US-A-3 842 111, US-A-3 873 489, US-A-3 978 103, US-A-3 997 581 déjà cités, ou dans les documents de brevet plus récents US-A- 5 580 919, US-A- 5 583 245, US-A- 5 663 396, US-A- 5 684 171, US-A- 5 684 172, US-A- 5 696 197 qui décrivent en détails de tels composés connus.
   Conviennent en particulier pour la mise en oeuvre de l'invention, sans que la définition ci-après soit limitative, des alkoxysilanes polysulfurés dits "symétriques" répondant à la formule générale (I) suivante:

   (I) Z-A-Sₙ-A-Z,

   dans laquelle:
   - n est un entier de 2 à 8;
   - A est un radical hydrocarboné divalent;
   - Z répond à l'une des formules ci-après: 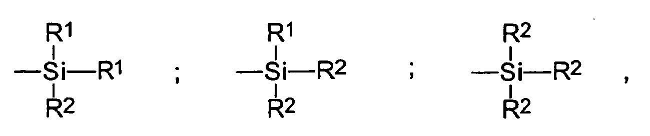 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈;
   - les radicaux R², substitués ou non substitués, identiques ou différents entre eux, représentent un groupe alkoxyle en C₁-C₁₈ ou cycloalkoxyle en C₅-C₁₈.

Dans la formule (I) ci-dessus, le nombre n est de préférence un nombre entier de 3 à 5.

Dans le cas d'un mélange d'alkoxysilanes polysulfurés répondant à la formule (I) ci-dessus, notamment des mélanges usuels disponibles commercialement, la valeur moyenne des "n" est un nombre fractionnaire, de préférence compris entre 3 et 5, plus préférentiellement proche de 4.

Le radical A, substitué ou non substitué, est de préférence un radical hydrocarboné divalent, saturé ou non saturé, comportant de 1 à 18 atomes de carbone. Conviennent notamment des groupements alkylène en C₁-C₁₈ ou des groupements arylène en C₆-C₁₂, plus particulièrement des alkylènes en C₁-C₁₀, notamment en C₂-C₄, en particulier le propylène.

Les radicaux R¹ sont préférentiellement des groupes alkyle en C₁-C₆, cyclohexyle ou phényle, notamment des groupes alkyle en C₁-C₄, plus particulièrement le méthyle et/ou l'éthyle.

Les radicaux R² sont préférentiellement des groupes alkoxyle en C₁-C₈ ou cycloalkoxyle en C₅-C₈, plus particulièrement le méthoxyle et/ou l'éthoxyle.

De tels alkoxysilanes polysulfurés dits "symétriques", ainsi que certains de leurs procédés d'obtention sont par exemple décrits dans les brevets récents US-A- 5 684 171 et US-A- 5 684 172 donnant une liste détaillée de ces composés connus, pour n variant de 2 à 8.

Préférentiellement, l'alkoxysilane polysulfuré mis en oeuvre dans l'invention est un polysulfure, en particulier un tétrasulfure, de bis(alkoxyl(C₁-C₄)silylpropyle), plus préférentiellement de bis(trialkoxyl(C₁-C₄)silylpropyle), notamment de bis(3-triéthoxysilylpropyle) ou de bis(3-triméthoxysilylpropyle).

A titre d'exemple particulièrement préférentiel, on utilise le tétrasulfure de bis(triéthoxysilylpropyle) ou TESPT, de formule [(C₂H₅O)₃Si(CH₂)₃S₂]₂, commercialisé par exemple par la société Degussa sous la dénomination Si69 (ou X50S lorsqu'il est supporté à 50% en poids sur du noir de carbone), ou encore par la société Witco sous la dénomination Silquest A1289 (dans les deux cas mélange commercial de polysulfures avec une valeur moyenne pour n qui est proche de 4).

Dans les compositions de caoutchoucs des pneumatiques conformes à l'invention, la teneur en alkoxysilane polysulfuré peut être comprise dans un domaine de 1 % à 15% par rapport au poids de charge blanche renforçante.

Bien entendu, l'alkoxysilane polysulfuré pourrait être préalablement greffé (via la fonction "X") sur l'élastomère diénique de la composition de l'invention, l'élastomère ainsi fonctionnalisé ou "précouplé" comportant alors la fonction "Y" libre pour la charge blanche renforçante. L'alkoxysilane polysulfuré pourrait également être préalablement greffé (via la fonction "Y") sur la charge blanche renforçante, la charge ainsi "précouplée" pouvant ensuite être liée à l'élastomère diénique par l'intermédiaire de la fonction libre "X".

On préfère toutefois, notamment pour des raisons de meilleure mise en oeuvre des compositions à l'état cru, utiliser l'agent de couplage, soit greffé sur la charge blanche renforçante, soit à l'état libre (i.e., non greffé).

Les compositions des pneumatiques conformes à l'invention contiennent, outre ladite matrice élastomère, ladite charge renforçante et le(s)agent(s) de liaison charge blanche renforçante/ élastomère, tout ou partie des autres constituants et additifs habituellement utilisés dans les mélanges de caoutchouc, comme des plastifiants, pigments, antioxydants, cires anti-ozonantes, un système de vulcanisation à base soit de soufre et/ou peroxyde et/ou de bismaléimides, des accélérateurs de vulcanisation, des huiles d'extension, un ou des agents de recouvrement de la charge blanche renforçante, tels que des alkylalkoxysilanes, polyols, amines, amides.

Les caractéristiques précitées de la présente invention, ainsi que d'autres, seront mieux comprises à la lecture de la description suivante de plusieurs exemples de réalisation de l'invention.

Dans tous les exemples, sauf indication différente, les compositions sont données en poids, et les propriétés des compositions de caoutchouc sont évaluées comme suit:

### - Dureté Shore:

La dureté shore A est mesurée selon la norme ASTM D 2240-91.

### - Modules d'allongement:

On mesure les modules d'allongement à 100 % (MA100) et à 300 % (MA300) selon la norme ISO37-1977.

### - Pertes hystérétiques (PH):

Les pertes hystérétiques (PH) sont mesurées par rebond à 60° C selon la norme ISO R17667 et sont exprimées en %.

### - Propriétés dynamiques à 10 Hz et 60° C:

Il s'agit du module maximal à faible déformation (en MPa) et de la valeur maximale de tangente delta.

### - Résistance au roulement:

Elle est évaluée (en %) sur un volant par le rapport des énergies, pour un pneumatique « témoin » et un pneumatique à tester, nécessaires pour conserver sur ledit volant une vitesse déterminée de roulage. La résistance au roulement est améliorée si le rapport « témoin/ à tester » est supérieur à 100.

### - Résistance à l'usure:

Elle est évaluée par le rapport (en %) de la perte de poids d'un pneumatique « témoin » sur celle d'un pneumatique à tester, lesdits pneumatiques étant en tous points identiques hormis la bande de roulement.

### - Augmentation de pertes de poids:

Cette valeur représente la différence relative (en %) entre une vitesse de perte de poids initiale (en début de roulage, soit entre 0 et 50 000 km) et une vitesse de perte de poids finale (en fin de vie, soit après 100 000 km de roulage). Plus précisément, cette augmentation de perte de poids est définie par le rapport « (perte de poids finale - perte de poids initiale) / (perte de poids initiale) ». Une valeur d'augmentation de perte de poids inférieure à 100 % témoigne d'une amélioration par rapport au pneumatique « témoin ».

### - Début d'usure irrégulière:

Cette valeur représente d'une manière générale la distance parcourue à laquelle apparaît le changement de la vitesse de perte de poids.

Comme on peut le voir sur le graphique type ci-après annexé (les valeurs en abscisse sont données uniquement à titre illustratif), la caractéristique usuelle de la vitesse de perte de poids en fonction de la distance parcourue présente successivement:
- un premier tronçon de pente sensiblement nulle correspondant à une usure normale du pneumatique (non irrégulière),
- un second tronçon sensiblement linéaire et de pente relativement élevée correspondant au début de l'usure irrégulière, et
- un troisième tronçon de pente sensiblement nulle correspondant à la fin de vie du pneumatique.

Pour quantifier le début de l'usure irrégulière se rapportant à ce second tronçon, on a utilisé dans les exemples qui suivent une valeur médiane de distance de roulage (voir ligne en pointillés sur le graphique), laquelle correspond sensiblement à une vitesse de perte de poids médiane.

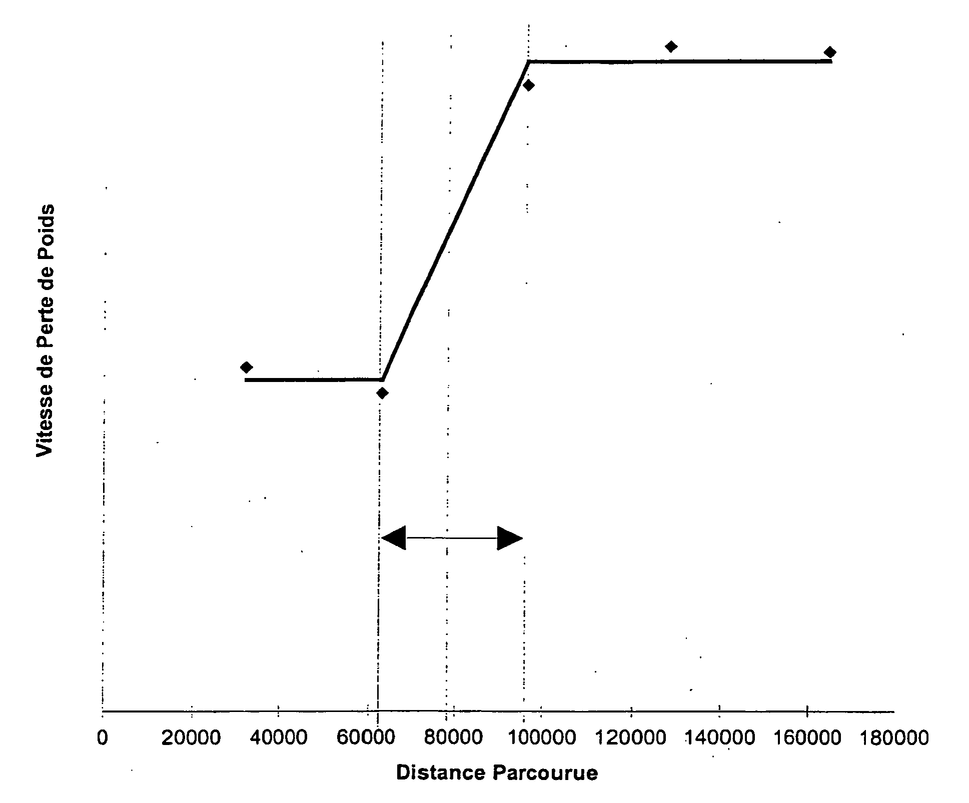

### EXEMPLE 1:

On a testé dans cet exemple des compositions de bande de roulement de pneumatique de type poids-lourd, qui sont destinés à être montés sur un essieu moteur d'un véhicule poids-lourd.

On a comparé quatre compositions (compositions 3 à 6), qui sont toutes à base d'un SBR comportant en bout de chaîne un groupe fonctionnel actif pour un couplage à la silice et d'une charge renforçante constituée de silice, avec:
- une composition « témoin » (composition 1) qui est représentative de l'état de la technique connu pour un pneu poids-lourd monté sur un essieu moteur. Cette composition est à base d'un coupage de caoutchouc naturel (il s'agit d'un caoutchouc naturel peptisé, de Mooney ML(1+4) à 100° C égal à 60) et d'un polybutadiène à fort taux de cis (BR cis), et d'une charge renforçante constituée de noir de carbone, et
- une composition (composition 2) qui est à base d'un coupage de deux SBR A et B non fonctionnalisés (SBR A est non étendu à l'huile, alors que SBR B est étendu avec 35,5 parties en poids d'huilé aromatique) et d'une charge renforçante constituée de silice.

Les formulations respectives de ces compositions sont données dans le tableau 1 ci-après.

Concernant les compositions 2 à 6, les SBR utilisés (A, B, C, D) sont tous préparés en solution et en continu. Plus précisément, leurs caractéristiques de viscosité et de microstructure sont citées dans le tableau 1 ci-après.

**Tableau 1:**

| SBR | Mooney ML(1+4) | taux (%) de -1,2 | taux (%) de styrène |
|---|---|---|---|
| SBR A | 54 | 24 | 25 |
| SBR B | 54 | 24 | 40 |
| SBR C | 48 | 24 | 33 |
| SBR D | 48 | 24 | 30 |

Quant à la silice utilisée dans ces compositions 2 à 6, il s'agit d'une silice hautement dispersible dont la dénomination est « Zeosil 1165 MP » et qui est commercialisée par la société Rhodia.

Concernant les compositions 3 à 6, le SBR C utilisé est un SBR fonctionnalisé avec l'hexaméthylcyclotrisiloxane, de telle sorte qu'il comporte en extrémité de chaîne un groupe diméthylsilanol. On pourra se référer au document de brevet français FR-A- 2 740 778 pour une description détaillée de la synthèse de ce SBR fonctionnalisé.

Plus précisément, on notera que la composition 4 se différencie de la composition 3 par la nature de l'huile d'extension qu'elle comporte (huile paraffinique à la place d'une huile aromatique).

On notera également que la composition 5 se différencie de la composition 4, en ce qu'elle comporte un agent de recouvrement « Si116 » (hexadécyltriméthoxysilane) de la silice.

On notera enfin que la composition 6 se différencie des compositions 3 et 4, en ce que sa matrice élastomère est constituée d'un coupage de 70 parties en poids dudit SBR C fonctionnalisé avec 30 parties en poids d'un SBR D ne comprenant pas de fonction active pour un couplage à la silice (SBR D est un SBR étoilé avec SnCl₄).

On a procédé à la vulcanisation de chacune de ces compositions à une température de 150° C, pendant une durée suffisante pour atteindre 99 % de la valeur maximale du couple mesuré au rhéomètre.

**Tableau 2:**

| Composition | comp. 1 | comp. 2 | comp. 3 | comp. 4 | comp. 5 | comp. 6 |
|---|---|---|---|---|---|---|
| NR | 60 | - | - | - | - | - |
| BR cis | 40 | - | - | - | - | - |
| SBR A | - | 50 | - | - | - | - |
| SBR B | - | 68,75 | - | - | - | - |
| SBR C | - | - | 100 | 100 | 100 | 70 |
| SBR D | - | - | - | - | - | 30 |
| N234 | 54 | - | - | - | - | - |
| Zeosil 1165 MP | - | 57,5 | 65 | 65 | 65 | 65 |
| X50S | - | 9 | 10,2 | 10,2 | 10,2 | 10,2 |
| Huile aromatique | - | - | 18,75 | - | - | - |
| Huile paraffinique | - | - | - | 18,75 | 18,75 | 18,75 |
| Paraffine | 1 | 1 | 1 | 1 | 1 | 1 |
| ZnO | 3,0 | 2,5 | 2,5 | 2,5 | 2,5 | 2,5 |
| Acide stéarique | 1,5 | 2,0 | 2,0 | 2,0 | 2,0 | 2,0 |
| Diphénylguanidine | - | 1,1 | 1,25 | 1,25 | 1,25 | 1,25 |
| Antioxydant | 2 | 2 | 2 | 2 | 2 | 2 |
| Si116 | - | - | - | - | 1,5 | - |
| Soufre soluble | 1,1 | 1,2 | 1,2 | 1,2 | 1,2 | 1,2 |
| CBS | 1,1 | 2 | 1,2 | 1,2 | 1,2 | 1,2 |
| ZBEC | - | - | 0,2 | 0,2 | 0,2 | 0,2 |

Dans ce tableau 2:
- « X50S » est la dénomination d'un agent de liaison silice/ élastomère, commercialisé par la société Degussa, et constitué de l'association de l'agent de liaison de dénomination « Si69 » (bis-3-(triéthoxysilylpropyl) tétrasulfure) et d'un noir de carbone N330 dans un rapport pondéral 50/50;
- l'antioxydant utilisé est la N-(1,3-diméthyl butyl) N'-phényl p-phénylène diamine (6PPD en abrégé);
- « CBS » et « ZBEC » sont les dénominations d'accélérateurs de vulcanisation (respectivement cyclohexyl benzothiazyl sulfénamide et dibenzyldithiocarbamate de zinc).

On a comparé entre elles les propriétés à l'état vulcanisé des compositions 1 à 6. Les résultats son consignés dans le tableau 3.

**Tableau 3:**

| Compositions | comp. 1 | comp. 2 | comp. 3 | comp. 4 | comp. 5 | comp. 6 |
|---|---|---|---|---|---|---|
| Shore A | 64 | 65 | 66 | 64 | 62 | 67 |
| MA100 | 2,00 | 2,05 | 2,20 | 2,13 | 2,03 | 2,20 |
| MA300 / MA100 | 1,16 | 1,15 | 1,45 | 1,45 | 1,525 | 1,425 |
| PH(%) | 28 | 23,5 | 19,9 | 18,3 | 16,1 | 20,8 |
| **Propriétés dynamiques** | | | | | | |
| Module maximum (MPa) | 6,26 | 3,87 | 3,05 | 2,65 | 2,01 | 3,48 |
| tangente delta maximum | 0,193 | 0,180 | 0,125 | 0,116 | 0,096 | 0,142 |
| **Résultats en roulage** | | | | | | |
| Résistance au roulement (%) | 100 | 104 | 113 | 114 | 118 | 111 |
| Résistance à l'usure (%) | 100 | 52 | 104 | 112 | 104 | 107 |
| Augmentation de perte de poids (%) | 100 | | 89 | 87 | 91 | 86 |
| Début usure irrégulière (10³ km) | 48 | | 80 | 80 | 80 | 80 |

Ce tableau 3 montre que pour les compositions de bande de roulement 3, 4, 5 et 6 des pneumatiques conformes à l'invention, la résistance au roulement est notablement réduite, la résistance à l'usure augmentée et le retard dans l'apparition de l'usure irrégulière est significativement accru, d'une part, vis-à-vis de la composition 1 « témoin » à base du coupage NR/ BR et de noir de carbone et, d'autre part, vis-à-vis de la composition 2 à base de SBR non fonctionnalisé et de silice.

En particulier, on notera que l'apparition du phénomène d'usure irrégulière est nettement retardée pour les compositions 3 à 6, cette apparition correspondant à une distance de roulage qui est sensiblement doublée par rapport à celle relative à l'apparition de ce phénomène pour les compositions 1 et 2.

Ce retard dans l'apparition de l'usure irrégulière, joint à cette réduction de la résistance au roulement, représente un préjugé technique vaincu. En effet, il est connu de l'homme du métier que, dans le cas de pneumatiques poids-lourd montés sur un essieu moteur, lorsque la résistance au roulement diminue, la résistance à l'usure irrégulière augmente, et inversement.

### EXEMPLE 2:

On a testé dans cet exemple des compositions de bande de roulement de pneumatique de type poids-lourd, qui sont destinés à être montés sur un essieu directeur d'un véhicule poids-lourd.

On a comparé deux des compositions des pneus conformes à l'invention de l'exemple 1, qui sont lesdites compositions 4 et 5, avec:
- une nouvelle composition « témoin » (composition 7) dont la matrice élastomère est constituée de caoutchouc naturel (il s'agit dudit caoutchouc naturel peptisé, de Mooney ML(1+4) à 100° C égal à 60), et d'une charge renforçante constituée de noir de carbone, et
- la composition 2 de l'exemple 1.

Plus précisément, on notera que la composition 7 « témoin » comporte une résine RF aralkyl et une huile d'extension différente de celle comprise dans les compositions 2, 4 et 5 et, en plus de l'agent antioxydant « 6PPD » présent dans lesdites compositions 2, 4 et 5, un autre agent anti-oxydant connu sous l'abréviation « TMQ » (triméthylquinoléine constituée d'une 1,2-dihydro-2,2,4-triméthylquinone polymérisée).

On a procédé à la vulcanisation de chacune de ces compositions à une température de 150° C, pendant une durée suffisante pour atteindre 99 % de la valeur maximale du couple mesuré au rhéomètre.

**Tableau 4:**

| Composition | comp. 7 | comp. 2 | Comp. 4 | comp. 5 |
|---|---|---|---|---|
| NR | 100 | - | - | - |
| SBR A | - | 50 | - | - |
| SBR B | - | 68,75 | - | - |
| SBR C | - | - | 100 | 100 |
| N375 | 47.5 | - | - | - |
| Zeosil 1165 | - | 57,5 | 65 | 65 |
| X50S | - | 9 | 10,2 | 10,2 |
| Huile paraffinique | - | - | 18,75 | 18,75 |
| Resine RF Aralkyl | 1 | - | - | - |
| Huile Hexa 2.5 | 0,5 | - | - | - |
| Paraffine | 1 | 1 | 1 | 1 |
| ZnO | 3,0 | 2,5 | 2,5 | 2,5 |
| Acide stéarique | 2,5 | 2,0 | 2,0 | 2,0 |
| Diphénylguanidine | - | 1,1 | 1,25 | 1,25 |
| Antioxydant (6PPD) | 2 | 2 | 2 | 2 |
| TMQ | 1 | - | - | - |
| Si116 | - | - | - | 1,5 |
| Soufre soluble | 1,5 | 1,2 | 1,2 | 1,2 |
| CBS | 0,6 | 2 | 1,2 | 1,2 |
| ZBEC | - | - | 0,2 | 0,2 |

Dans ce tableau 4:
- la résine « RF Aralkyl » est une résine résorcinol formol et
- l'huile Hexa 2.5 est une huile à base d'hexadécylamine.

On a comparé entre elles les propriétés à l'état vulcanisé de ces compositions 2,4, 5 et 7. Les résultats son consignés dans le tableau 5.

**Tableau 5:**

| Compositions | comp. 7 | comp. 2 | comp. 4 | comp. 5 |
|---|---|---|---|---|
| Shore A | 64 | 65 | 64 | 62 |
| MA100 | 2,10 | 2,05 | 2,13 | 2,03 |
| MA300/MA100 | 1,247 | 1,15 | 1,45 | 1,525 |
| PH(%) | 23 | 23,5 | 18,3 | 16,1 |
| **Propriétés dynamiques** | | | | |
| Module maximum (MPa) | 4,61 | 3,87 | 2,65 | 2,01 |
| tangente delta maximum | 0,144 | 0,180 | 0,116 | 0,096 |
| **Résultats en roulage** | | | | |
| Résistance au roulement (%) | 100 | 79 | 107 | 109 |
| Résistance à l'usure (%) | 100 | 94 | 100 | 97 |
| Augmentation de perte de poids (%) | 100 | | 28 | 64 |
| Début usure irrégulière (10³ km) | 79 | | 95 | 95 |

Ce tableau 5 montre que pour les compositions de bande de roulement 4 et 5 des pneus conformes à l'invention, la résistance au roulement est notablement réduite, la résistance à l'usure sensiblement égale et le retard dans l'apparition de l'usure irrégulière est accru, d'une part, vis-à-vis de la composition 7 « témoin » à base de NR et de noir de carbone et, d'autre part, vis-à-vis de la composition 2 « non conforme » à base de SBR non fonctionnalisé et de silice.

De plus, on notera que pour les compositions de bande de roulement 4 et 5 des pneus conformes à l'invention, l'augmentation de perte de poids est très réduite par rapport à celle de la composition « témoin » 7, ce qui atteste d'un niveau d'usure irrégulière réduit pour ces compositions 4 et 5 selon l'invention.

## Revendications

1. Pneumatique Poids-lourd comportant une bande de roulement constituée d'une composition de caoutchouc réticulée, **caractérisée en ce que** ladite composition comprend :
- une matrice élastomère comprenant à titre majoritaire au moins, à titre d'élastomère diénique essentiellement insaturé, un élastomère SBR solution fonctionnalisé qui comprend à l'une au moins de ses extrémités de chaîne un groupe fonctionnel actif pour un couplage à une charge blanche renforçante, choisi dans le groupe constitué par le groupe silanol, les groupes alkoxysilane et les blocs polysiloxane ayant une extrémité silanol, ledit SBR fonctionnalisé présentant une température de transition vitreuse comprise entre -70°C et -20°C et une teneur en styrène comprise entre 10% et 50% en poids ;
- une charge renforçante comprenant à titre majoritaire une charge blanche renforçante, de préférence une silice ayant des surfaces spécifiques BET et CTAB inférieures à 450 m²/g;
- un agent de liaison assurant la liaison entre la charge blanche renforçante et le SBR fonctionnalisé.

2. Pneumatique Poids-lourd selon la revendication 1, **caractérisé en ce que** ledit groupe fonctionnel actif est un groupe silanol, de préférence diméthylsilanol.

3. Pneumatique Poids-lourd selon les revendications 1 ou 2, **caractérisé en ce que** la charge blanche renforçante est présente selon un taux de 20 à 80 pce (parties en poids pour cent parties de ladite matrice élastomère).

4. Pneumatique poids-lourd selon l'une quelconque des revendications 1 à 3, **caractérisé en ce que** ladite charge blanche renforçante est une silice ayant des surfaces spécifiques CTAB et BET allant de 80 m²/g à 260 m²/g.

5. Pneumatique Poids-lourd selon l'une quelconque des revendications 1 à 4, **caractérisé en ce que** ledit agent de liaison est un alkoxysilane polysulfuré.

6. Pneumatique Poids-lourd selon l'une quelconque des revendications 1 à 5, **caractérisé en ce que** ladite composition comprend également un alkylalkoxysilane à titre d'agent de recouvrement de ladite charge blanche renforçante.

7. Utilisation d'une composition de caoutchouc réticulable pour retarder lors du roulage l'apparition d'une usure irrégulière sur une bande de roulement d'un pneumatique Poids-lourd, **caractérisée en ce que** ladite composition constitue l'intégralité de ladite bande de roulement et comprend :
- une matrice élastomère comprenant à titre majoritaire au moins un élastomère SBR solution fonctionnalisé qui comprend à l'une au moins de ses extrémités de chaîne un groupe fonctionnel actif pour un couplage à une charge blanche renforçante, choisi dans le groupe constitué par le groupe silanol, les groupes alkoxysilane et les blocs polysiloxane ayant une extrémité silanol, ledit SBR fonctionnalisé présentant une température de transition vitreuse comprise entre -70°C et -20°C et une teneur en styrène comprise entre 10% et 50% en poids ;
- une charge renforçante comprenant à titre majoritaire une charge blanche renforçante, de préférence une silice ayant des surfaces spécifiques BET et CTAB inférieures à 450 m²/g ;
- un agent de liaison assurant la liaison entre la charge blanche renforçante et le SBR fonctionnalisé.

8. Utilisation selon la revendication 7, **caractérisée en ce que** ledit groupe fonctionnel actif est un groupe silanol.

9. Utilisation selon les revendications 7 ou 8, **caractérisée en ce que** la charge blanche renforçante est présente selon un taux de 20 à 80 pce (parties en poids pour cent parties de ladite matrice élastomère).

10. Utilisation selon l'une quelconque des revendications 7 à 9, **caractérisée en ce que** ladite charge blanche renforçante est une silice ayant des surfaces spécifiques CTAB et BET allant de 80 m²/g à 260 m²/g.

11. Utilisation selon l'une quelconque des revendications 7 à 10, **caractérisée en ce que** ledit agent de liaison est un alkoxysilane polysulfuré.

12. Utilisation selon l'une quelconque des revendications 7 à 11, **caractérisée en ce que** ladite composition comprend également un alkylalkoxysilane à titre d'agent de recouvrement de ladite charge blanche renforçante.

## Claims

1. A heavy-vehicle tyre comprising a tread which is formed of a cross-linked rubber composition, **characterised in that** said composition comprises:
- an elastomeric matrix comprising majoritarily at least, as essentially unsaturated diene elastomer, a functionalised solution SBR elastomer which comprises at at least one of its chain ends a functional group which is active for coupling to a reinforcing white filler, selected from among the group consisting of the silanol group, alkoxysilane groups and polysiloxane blocks having a silanol end, said functionalised SBR having a glass transition temperature of between -70°C and -20°C and a styrene content of between 10% and 50% by weight;
- a reinforcing filler comprising majoritarily a reinforcing white filler, preferably a silica having specific BET and CTAB surface areas of less than 450 m²/g;
- a bonding agent providing the bond between the reinforcing white filler and the functionalised SBR.

2. A heavy-vehicle tyre according to Claim 1, **characterised in that** said active functional group is a silanol group, preferably dimethylsilanol.

3. A heavy-vehicle tyre according to Claims 1 or 2, **characterised in that** the reinforcing white filler is present in a quantity of from 20 to 80 phr (parts by weight per hundred parts of said elastomeric matrix).

4. A heavy-vehicle tyre according to any one of Claims 1 to 3, **characterised in that** said reinforcing white filler is a silica having specific CTAB and BET surface areas of from 80 m²/g to 260 m²/g.

5. A heavy-vehicle tyre according to any one of Claims 1 to 4, **characterised in that** said bonding agent is a polysulphurised alkoxysilane.

6. A heavy-vehicle tyre according to any one of Claims 1 to 5, **characterised in that** said composition also comprises an alkylalkoxysilane as covering agent for said reinforcing white filler.

7. The use of a cross-linkable rubber composition for delaying, during travel, the appearance of irregular wear on a tread of a heavy-vehicle tyre, **characterised in that** said composition constitutes the whole of said tread and comprises:
- an elastomeric matrix comprising majoritarily at least a functionalised solution SBR elastomer which comprises at at least one of its chain ends a functional group which is active for coupling to a reinforcing white filler, selected from among the group consisting of the silanol group, alkoxysilane groups and polysiloxane blocks having a silanol end, said functionalised SBR having a glass transition temperature of between -70°C and -20°C and a styrene content of between 10% and 50% by weight;
- a reinforcing filler comprising majoritarily a reinforcing white filler, preferably a silica having specific BET and CTAB surface areas of less than 450 m²/g;
- a bonding agent providing the bond between the reinforcing white filler and the functionalised SBR.

8. The use according to Claim 7, **characterised in that** said active functional group is a silanol group.

9. The use according to Claims 7 or 8, **characterised in that** the reinforcing white filler is present in a quantity of from 20 to 80 phr (parts by weight per hundred parts of said elastomeric matrix).

10. The use according to any one of Claims 7 to 9, **characterised in that** said reinforcing white filler is a silica having specific CTAB and BET surface areas of from 80 m²/g to 260 m²/g.

11. The use according to any one of Claims 7 to 10, **characterised in that** said bonding agent is a polysulphurised alkoxysilane.

12. The use according to any one of Claims 7 to 11, **characterised in that** said composition also comprises an alkylalkoxysilane as covering agent for said reinforcing white filler.

## Patentansprüche

1. Lastkraftwagenreifen, der einen Laufstreifen aufweist, der aus einer vernetzten Kautschukmischung besteht, **dadurch gekennzeichnet, dass** die Mischung enthält:
- eine Elastomermatrix, die zumindest in einem überwiegenden Anteil als im Wesentlichen ungesättigtes Dienelastomer mindestens ein funktionalisiertes SBR-Elastomer (Lösung) enthält, das an mindestens einem Kettenende eine funktionale Gruppe aufweist, die für eine Kupplung mit einem hellen verstärkenden Füllstoff wirksam ist und unter der Silanolgruppe, Alkoxysilangruppen und Polysiloxanblöcken mit einem Silanolende ausgewählt ist, wobei der funktionalisierte SBR eine Glasübergangstemperatur von -70 bis -20 °C aufweist und einen Styrolgehalt von 10 bis 50 Gew.-% hat;
- einen verstärkenden Füllstoff, der in einem überwiegenden Anteil einen hellen verstärkenden Füllstoff umfasst, vorzugsweise eine Kieselsäure mit spezifischer BET-Oberfläche und spezifischer CTAB-Oberfläche unter 450 m²/g; und
- ein Verknüpfungsmittel, das die Verknüpfung des hellen verstärkenden Füllstoffs mit dem funktionalisierten SBR sicherstellt.

2. Lastkraftwagenreifen nach Anspruch 1, **dadurch gekennzeichnet, dass** es sich bei der funktionellen Gruppe um eine Silanolgruppe und vorzugsweise Dimethylsilanol handelt.

3. Lastkraftwagenreifen nach den Ansprüchen 1 oder 2, **dadurch gekennzeichnet, dass** der helle verstärkende Füllstoff in einer Menge von 20 bis 80 pce (Gewichtsteile auf 100 Teile Elastomermatrix) enthalten ist.

4. Lastkraftwagenreifen nach einem der Ansprüche 1 bis 3.
**dadurch gekennzeichnet, dass** der helle verstärkende Füllstoff eine Kieselsäure mit spezifischer CTAB-Oberfläche und spezifischen BET-Oberfläche von 80 bis 260 m²/g ist.

5. Lastkraftwagenreifen nach einem der Ansprüche 1 bis 4,
**dadurch gekennzeichnet, dass** das Verknüpfungsmittel ein polysulfidhaltiges Alkoxysilan ist.

6. Lastkraftwagenreifen nach einem der Ansprüche 1 bis 5,
**dadurch gekennzeichnet, dass** die Zusammensetzung ferner als Bedeckungsmittel für den hellen verstärkenden Füllstoff ein Alkylalkoxysilan enthält.

7. Verwendung einer vernetzbaren Kautschukmischung zur Verzögerung des Auftretens eines unregelmäßigen Verschleißes an einem Laufstreifen eines Schwerlastkraftwagenreifens bei der Fahrt, **dadurch gekennzeichnet, dass** die Zusammensetzung den gesamten Laufstreifen bildet und enthält:
- eine Elastomermatrix, die in einem überwiegenden Anteil als im Wesentlichen ungesättigtes Dienelastomer mindestens ein funktionalisiertes SBR-Elastomer (Lösung) enthält, das an mindestens einem Kettenende eine funktionale Gruppe aufweist, die für eine Kupplung mit einem hellen verstärkenden Füllstoff wirksam ist und unter der Silanolgruppe, Alkoxysilangruppen und Polysiloxanblöcken mit einem Silanolende ausgewählt ist, wobei der funktionalisierte SBR eine Glasübergangstemperatur von -70 bis -20 °C aufweist und einen Styrolgehalt von 10 bis 50 Gew.-% hat;
- einen verstärkenden Füllstoff, der in einem überwiegenden Anteil einen hellen verstärkenden Füllstoff umfasst, vorzugsweise eine Kieselsäure mit spezifischer BET-Oberfläche und spezifischer CTAB-Oberfläche unter 450 m²/g; und
- ein Verknüpfungsmittel, das die Verknüpfung des hellen verstärkenden Füllstoffs mit dem funktionalisierten SBR sicherstellt.

8. Verwendung nach Anspruch 7, **dadurch gekennzeichnet, dass** die wirksame funktionelle Gruppe eine Silanolgruppe ist.

9. Verwendung nach den Ansprüchen 7 oder 8, **dadurch gekennzeichnet, dass** der helle verstärkende Füllstoff in einer Menge von 20 bis 80 pce (Gewichtsteile auf 100 Teile Elastomermatrix) enthalten ist.

10. Verwendung nach einem der Ansprüche 7 bis 9, **dadurch gekennzeichnet, dass** der helle verstärkende Füllstoff eine Kieselsäure mit spezifischer CTAB-Oberfläche und spezifischer BET-Oberfläche von 80 bis 260 m²/g ist.

11. Verwendung nach einem der Ansprüche 7 bis 10, **dadurch gekennzeichnet, dass** das Verknüpfungsmittel ein polysulfidhaltiges Alkoxysilan ist.

12. Verwendung nach einem der Ansprüche 7 bis 11, **dadurch gekennzeichnet, dass** die Mischung ferner ein Alkylalkoxysilan als Bedeckungsmittel für den hellen verstärkenden Füllstoff enthält.
